# EUROPEAN PATENT APPLICATION

(11) **EP 0 547 632 A1**
(43) Date of publication of application: **23.06.1993**
(21) Application number: 92121633.9
(22) Date of filing: 18.12.1992
(51) Int. Cl.: F16H 3/22

(54) **Sliding gear**

(30) Priority: 19.12.1991 JP 336778/91
(71) Applicant: MITSUBISHI JIDOSHA KOGYO KABUSHIKI KAISHA, Tokyo 108 (JP)
(72) Inventor: Morita, Toshihiko, c/o Mitsubishi Jidosha Kogyo KK, Tokyo (JP)
(74) Representative: Kern, Ralf M., Dipl.-Ing.

(57) **Abstract**

A sliding gear (10) has teeth (11) whose side edges are bevelled. The teeth have different width (B1,B2) but are bevelled by the same angle, or have the same width but are bevelled by different angles (ß1,ß2). The sliding gear slides to contact with its mating gears (3) at the bevelled edges, and then rotates so as to completely engage with the mating gears.

## Description

### BACKGROUND OF THE INVENTION

### 1. Field of the Invention:

This invention generally relates to a sliding gear in which a gear slides along its axe so as to place itself in or out of engagement with its mating gears, and more particularly to a sliding gear in which outer teeth of the gears engage with one another.

### 2. Description of the Related Art:

Usually, a transmission for a motor vehicle includes gear trains in which speed changes are made by changing a rotational force, received at an input shaft, to a desired rotational force at a predetermined transmission ratio so as to be transmitted from an output shaft. Among the gear trains, a sliding gear is mainly used to transmit a reverse rotational force. Receiving the rotational force, the sliding gear slides along its axe, engages with its mating gear, reverse the received rotational force, and transmits the reversed force to another mating gear.

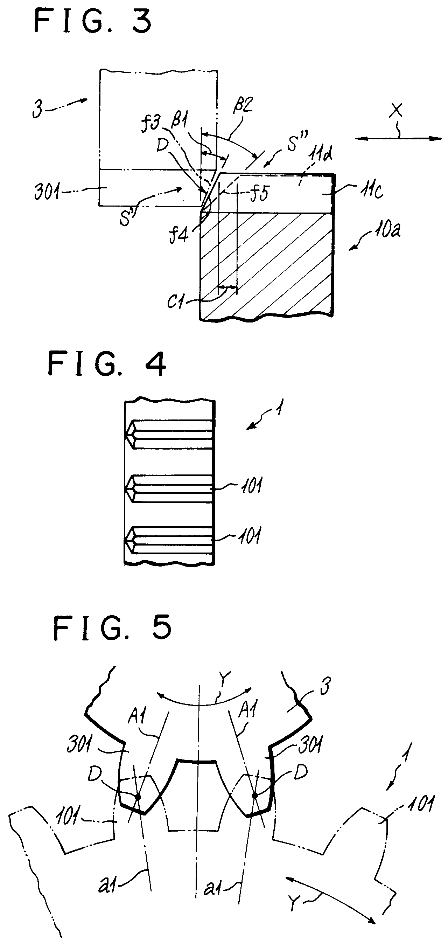

As shown in Figs. 4 to 6 of the accompanying drawings, an idler gear 1 as the sliding gear engages with and disengages from an input gear 3 on an input shaft 2 and a reverse gear 5 on a reverse operating shaft 4. At the time of speed change, the idler gear 1 slides along its axe, i.e. in the rotational direction X, in response to a speed changing operation, and contacts with side edges of the gears 3 and 5 on the input and output shafts. In this case, teeth on the outer peripheral surface (hereinafter called "outer teeth) of the idler gear 1 contact with outer teeth of the input gear 3 at a plurality of points D (refer to Fig. 5). Specifically, when the input gear 3 and the idler gear 1 contact with one another, the center lines A1 of the teeth 301 of the input gear 3 and the center lines a1 of the teeth 101 of the idler gear 1 intersect as shown in Fig. 5. In Fig. 5, the teeth of the counter gear 5 are omitted for simplification.

After the gears contact with one another at the points D, they relatively move until they can engage with one another. Under this condition, the idler gear 1 slides to completely engage with the foregoing gears.

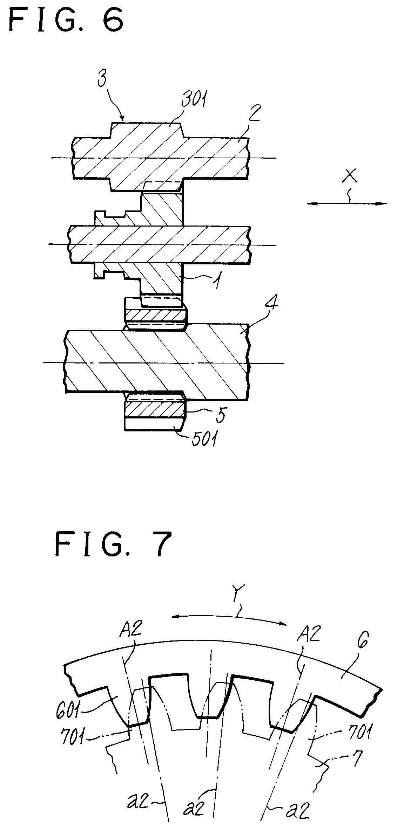

On the contrary, when teeth on the inner peripheral surface of a ring gear 6 engage with outer teeth of a gear 7 axially engage one another in the direction Y (i.e. vertically in the plane shown in Fig. 7), the center lines A2 of the teeth 601 of the ring gear 6 and the center lines a2 of the teeth 701 of the gear 7 are in parallel with one another as shown in Fig. 7, and scarcely intersect with one another. Therefore, these gears can slide relatively smoothly even when they contact with one another. Under this condition, the ring gear 6 further slides to completely engage with the gears 6 and 7.

With the engagement between the inner teeth and the outer teeth of the gears, the gears shift with their center lines A2 and a2 kept parallel with one another, so that the gears can smoothly engage with one another.

On the other hand, when the idler gear 1 slides along its axe so as to contact with the input gear 3 and the reverse gear 5 with their outer teeth, the center lines A1 of the teeth of the gears 3 and 5 intersect with the center lines a1 of the teeth of the idler gear 1 at a plurality of points D.

After these gears contact with one another at a plurality of points D, they relatively rotate against frictional resistances between them until they engage with one another. Therefore, there is an inconvenience that it takes relatively long for the teeth of the gears to completely engage with one another.

Although the field of the invention is different, an example of a gear having short and long teeth is exemplified in Japanese Patent Laid-Open Publication No. Sho 48-67649, which relates to a synchronizing unit of a so-called Borgwarner type. The synchronizing unit comprises a spline gear fitted on a sleeve. The spline gear has teeth which are divided into those engageable with a synchronization ring and those engageable with a dog tooth gear. The teeth of the gears have different chamfer angles depending upon the synchronization ring and the dog tooth gear to be engaged with.

This reference describes the spline gear fitted on a sleeve of the synchronizing unit, in which outer teeth of a gear engage with inner teeth of a mating gear. There is no citation which suggests or describes engagement between outer teeth of gears as is with the present invention.

### SUMMARY OF THE INVENTION

It is therefore an object of the invention to provide a sliding gear which solves the foregoing problems. According to the invention, the sliding gear comprises a first gear having teeth on its outer peripheral surface and fitted on a first shaft, an auxiliary shaft in parallel with the first shaft, and a sliding gear fitted on the auxiliary shaft, which has teeth on its outer surface, and is axially slidable on the auxiliary shaft so as to be engageable with the first gear.

A part of teeth of the first gear and/or the sliding gear is smaller than the other teeth in the width. Therefore, the point D where the gears contact with one another can be relatively reduced compared with conventional sliding gears.

### BRIEF DESCRIPTION OF THE DRAWINGS

Fig. 1 is a front view, a partly cutaway view, of a main part of a sliding gear according to a first embodiment of the invention.

Fig. 2 is a side sectional view, a partly cutaway view, of the sliding gear and an input gear.

Fig. 3 is a view similar to Fig. 1 showing a sliding gear according to a second embodiment.

Fig. 4 is a front view, a partly cutaway view, of a main part of a conventional sliding gear having teeth on the outer peripheral surface thereof.

Fig. 5 is a side sectional view of the conventional sliding gear of Fig. 4 and an input gear.

Fig. 6 is a sectional view of a main part of a gear train having the conventional sliding gear of Fig. 4.

Fig. 7 is a sectional view of a main part of a sliding gear having teeth on the inner peripheral surface thereof.

### DESCRIPTION OF PREFERRED EMBODIMENTS

A sliding gear according to a first embodiment will be described hereinafter with reference to the drawings.

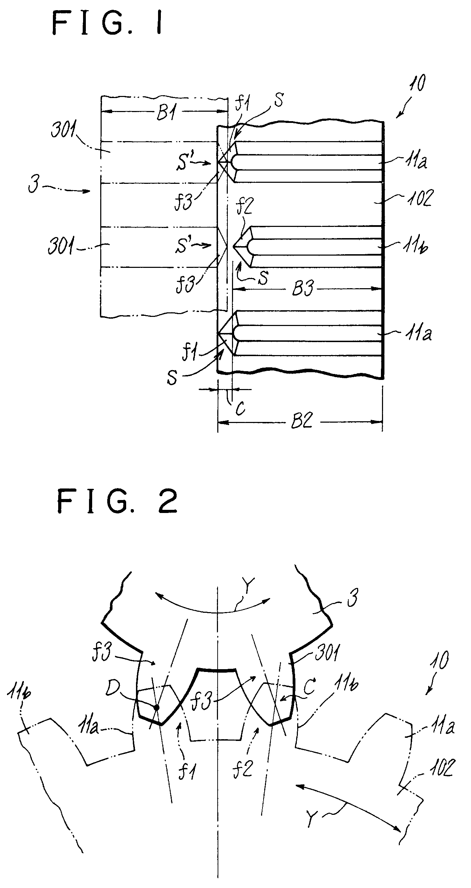

In Fig. 1, the sliding gear 10 can be used in place of the idler gear 1 of the transmission shown in Fig. 6. The sliding gear 10 is engageable with and disengageable from a gear 3 of an input shaft 2 and a reverse gear 5 of a reverse operating shaft 4.

All of the sliding gear 10, input gear 3 and reverse gear 5 are spur gears. The input gear 3 and the reverse gear 5 have teeth 301 and 501 on their outer peripheral surfaces. The teeth 301 and 501 have the same width B1.

On the contrary, the sliding gear 10 have teeth 11a and 11b alternately formed on its outer peripheral surface. The teeth 11a have a width B2, while the teeth 11b have a width B3. The teeth 11a and the teeth 11b are bevelled by a rake angle (represented by β₁ or β₂ in Fig. 3) at one side edge S of the sliding gear 10, so that chamfers f1 and f2 will be formed.

The teeth 11a have the width B2 which is substantially equal to the face width of the sliding gear 10. The teeth 11b are shorter than the teeth 11a by a predetermined amount c. The width B3 of the teeth 11b is substantially equal to (B2 - c).

As described above, the sliding gear 10 has the teeth 11a with the chambers f1 and the teeth 11b with the chamfers f2. The teeth 11a and 11b are alternately formed on the sliding gear 10 as described above.

In contrast to the sliding gear 10, the teeth 301 of the input gear 3 (on the input shaft 2) are bevelled by a predetermined rake angle at the side edge S' of the input gear 3, thereby forming chamfers f3. The side edge S' of the input gear 3 confront the side edge S of the spur gear 10. The teeth 501 of the counter gear 5 are also bevelled in the similar manner to the teeth 301 of the input gear 3.

In operation, when the sliding gear 10 is pushed toward the input gear 3 and the reverser gear 5 during speed change, a chamfer f1 of a tooth 11a of the sliding gear 10 comes into contact with a chamfer f3 of the gear 3 or the gear 5 (at the point D shown in Fig. 3). The chamfer f2 of the tooth 11b adjacent to the foregoing tooth 11a stays by the predetermined distance c away from the chamfers f3 of the gears 3 and 5. (In other words, the chamfer f2 is not in contact with the chamfer f3 at the point C in Fig. 2.)

Therefore, since the sliding gear 10 comes into contact with the gears 3 and 5 alternately at the point D, these gears 10, 3 and 5 are subject to relatively small frictional resistance. Along with their rotations, the gears 10, 3 and 5 easily leave from the contact points D, and slide to their engaging positions, respectively.

A sliding gear according to a second embodiment will be described hereinafter.

In this embodiment, a sliding gear 10a has outer teeth 11c and 11d which have the same width but have chamfers f4 and f5, which are bevelled with different angles β1 and β2 at the side edge S'' of the sliding gear 10a. The angle β2 is larger than the angle β1. These teeth 11c and 11d are alternately formed on the sliding gear 10a. When the sliding gear 10a slides along its axe in the direction X, a chamfer f4 of a tooth 11c comes into contact with a chamfer f3 of the input gear 3 or the reverse gear 5 while a chamfer f5 of a tooth lid stays at a distance c1 away from a chamfer f3 of the input gear 2 or the reverse gear 5.

In this embodiment, the sliding gear 10a comes into alternate contact with the input gear 3 or the reverse gear 5 at one point D. Therefore, these gears contact with one another with a relatively small frictional resistance, and can engage with one another after their rotations.

The sliding gears 10 and 10a are described assuming that they are applied to the transmission of the motor vehicle. These gears are also applicable to gear trains for a transfer system or the like.

Although the sliding gears have the teeth whose edges are bevelled, the teeth of the input gear or the reverse gear can be designed to have bevelled edges.

Furthermore, combination of the gears in the first and second embodiment is also advantageous.

According to the invention, the sliding gear having the teeth with differently bevelled edges contacts with its mating gears at a reduced number of points and smoothly engages with them.

## Claims

1. A gear system comprising:
a first gear having teeth on its outer peripheral surface and fitted on a first shaft;
an auxiliary shaft in parallel with the first shaft; and
a sliding gear fitted on the auxiliary shaft, having teeth on its outer surface, and being axially slidable on the auxiliary shaft so as to be engageable with the first gear,
wherein part of teeth of the first gear and/or the sliding gear are smaller than the other teeth in width.

2. A gear system according to claim 1, further including a second shaft in parallel with the first shaft and a second gear having teeth on its outer peripheral surface,
wherein the sliding gear slides to engage with the first and second gears and to reverse the direction of travel of the motor vehicle, thereby functioning as a manual transmission for a motor vehicle.

3. A gear system comprising:
a first gear having teeth on its outer peripheral surface and fitted on a first shaft;
an auxiliary shaft in parallel with the first shaft; and
a sliding gear fitted on the auxiliary shaft, having teeth on its outer surface, and being axially slidable on the auxiliary shaft so as to be engageable with the first gear,
wherein one end each of the teeth of the first gear and/or the sliding gear is bevelled according to predetermined angles in the respective gears.

4. A gear system according to claim 3 further including a second shaft in parallel with the first shaft and a second gear having teeth on its outer peripheral surface,
wherein the sliding gear slides to engage with the first and second gears and to reverse the direction of travel of the motor vehicle, thereby functioning as a manual transmission for a motor vehicle.

5. A gear system comprising:
a first gear having teeth on its outer peripheral surface and fitted on a first shaft;
an auxiliary shaft in parallel with the first shaft; and
a sliding gear fitted on the auxiliary shaft, having teeth on its outer surface, and being slidable on the auxiliary shaft so as to be engageable with the first gear,
wherein the first gear and/or the sliding gear includes teeth some of which have a standard width and some of which have a reduced width, and wherein one end each of the teeth of the first gear and/or the sliding gear is bevelled according to predetermined angles in the respective gears.

6. A gear system according to claim 5 further including a second shaft in parallel with the first shaft and a second gear having teeth on its outer peripheral surface
wherein the sliding gear slides to engage with the first and second gears so as to reverse the direction of travel of the motor vehicle, thereby functioning as a manual transmission for a motor vehicle.
